Europäisches Patentamt

European Patent Office

Office européen des brevets

(11) Publication number: **0 297 645**
**A1**

## (12) EUROPEAN PATENT APPLICATION

(21) Application number: **88201184.4**

(22) Date of filing: **09.06.88**

(51) Int. Cl.⁴: **H01G 1/14**

(30) Priority: **02.07.87 SE 8702738**

(43) Date of publication of application:
**04.01.89 Bulletin 89/01**

(84) Designated Contracting States:
**DE FR GB IT**

(71) Applicant: **RIFA AB**
**Box 945**
**S-391 29 KALMAR(SE)**

(72) Inventor: **Radszuweit, Reinhold Fritz**
**8355 Källstorpsmala**
**S-388 14 Trekanten(SE)**
Inventor: **Woltmann, Gernot**
**Krassegatan 5**
**S-386 00 Färjestaden(SE)**

(74) Representative: **Nydell, Peder**
**Nydells Patentbyra Storgatan 57**
**S-392 31 Kalmar(SE)**

(54) A contact device for electrical components.

(57) A contact device for electrical components, particularly capacitors (12), which are encapsulated in a casing (11) having a lid (10) in which the contact device is mounted. The contact device has a contact means (18) in the form of a strip having a tube rivet (20) by which the contact means is secured to the lid. The strip shaped contact means (18) has a second end with a screw connection (25, 26). The lid has projections (31, 32) of insulating material to increase the creepage distance. The second end portion of the contact means is designed as a tongue (24) which is locked in a locking groove (27) in one (32) of the projections.

Fig.1

EP 0 297 645 A1

## TECHNICAL FIELD

The invention relates to a contact device for electrical components, for instance capacitors, which are encapsulated in a casing that is provided with an insulating cover lid, the contact device being mounted in the lid and designed to connect terminal leads to the component via holes extending through the lid, the contact device having at least one contact means in the form of a strip having a first end portion designed as, or alternatively, supporting a tube rivet, by which the contact means is secured to the lid, the tube rivet forming an electrical feed-through for the terminal leads.

## BACKGROUND PRIOR ART

A contact device of the aforementioned kind is known from DE AS 2,126,460. The tube rivet shown therein is provided with a contact means in the form of a strip which is intended for a solder connection or a plug contact connection. The contact means can, however, not be used for a screw connection, because it will not withstand the heavy screw rotary forces thereof.

This known contact device is disadvantageous because any connection that will be made to an external circuit will be of poor quality. This may even cause a disconnection. Therefore, when power capacitors are concerned, screw connections are rather being used.

Such a screw connection may, as examplified in US patent specification 3,681,666 or DE OS 2,343,075, consist of an integrated pole shaped feed through molded in the lid, one end of the feed-through being in the shape of a screw nut for a clamping screw, the other end of which being adapted to be connected with a terminal lead to the capacitor winding by riveting, soldering or the like.

Because the feed through has a relatively small contact area against the lid, there is a great risk that it may be wrenched loose when the screw connection is too heavily tightened.

The simple production technique being used in the above described tube rivet capacitor type cannot be used in connection with the known screw connections, which causes a higher cost of production.

When high power capacitors are concerned, which work with high voltages, it is also necessary to have sufficient creepage distances between the terminal contacts and also between each terminal contact and earth or ground. Known capacitors, for instance General Electric type 2316134. have solved this problem by placing a sink of insulating material around the terminal contacts. This construction is disadvantageous since condense water may easily be accumulated in these sinks, thereby destroying the insulation.

## SUMMARY OF THE INVENTION

The object of the invention is to accomplish an efficient screw proof and vibratory proof contact device for components which are encapsulated in a casing that is provided with an insulated cover lid, where the contact device is designed as a feed-through in the cover lid.

The invention also provides sufficient creepage distances without any risk for accumulation of condense water. The expression "creepage distance" means the shortest distance between two conducting elements that any surface leakage current has to travel along the surface of an insulated object.

The characterising features of the invention will be evident from the appended claims.

## BRIEF DESRCIPTION OF THE DRAWINGS

The invention will be described in more detail with reference to the accompanying drawings, in which:

Figure 1 is a cross-section, and

Figure 2 is a plan view seen from above of a cover lid that is provided with contact means.

Figure 3 is a cross-section, and

Figure 4 is a plan view seen from above of a cover lid that is provided with a safety disc.

## DESCRIPTION OF A PREFERRED EMBODIMENT

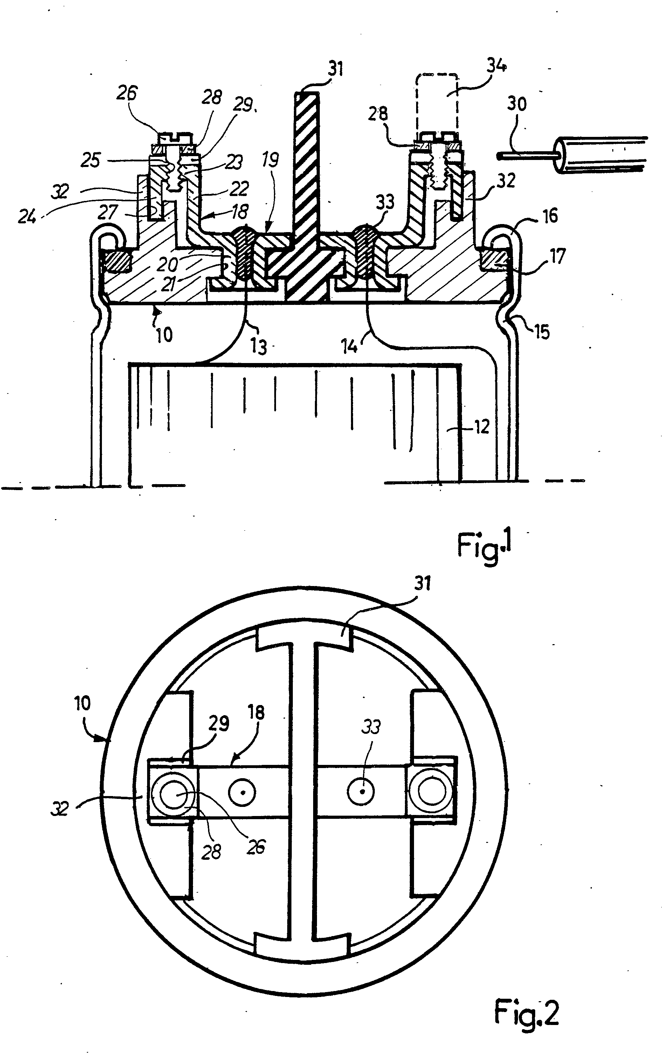

Figures 1 and 2 shows a cover lid 10 of an insulating material. The cover lid closes the open end of an encapsulation 11 containing at least one electrical component. particularly an electrical capacitor 12 which is provided with terminal lead wires 13, 14. The cover lid 10 rests against an impression 15 and is retained there because the edge 16 of the encapsulation is bent around a sealing ring 17. against which the bent edge 16 rests and ensures a hermetic sealing.

The contact means consists of a metallic strip 18, one end 19 of which is extended to form a tube rivet 20 which is secured in a hole 21 extending through the cover lid 10. The terminal lead wires 13, 14 are brought into the tube rivets and soldered to a fix position therein by a solder 33. This operation may be performed after assembling the lid 10 and securing it in the casing 11.

Before the solder 33 is applied, the openings may be used to fill the casing with oil with any known method.

The other end of the contact means 18 is U-bent and has a portion 22 extending upwardly from the portion 19, and a substantially plane portion 23 extending in parallel with the lid 10, and a portion 24 in the form of a tongue extending downwardly. The plane portion 23 is provided with a threaded hole 25 for a fastening screw 26. The downwardly extending tongue portion 24 co acts with a locking groove 27 in the lid. Thereby, the contact means 18 will be locked such that the rotary screw forces that will arise when tightening the screw 26 will not cause the contact means 18 to rotate around the tube rivet 20.

The plane portion 23 is suitably provided with folded-up ears 29 in order to hold a clamping disc 28 for a terminal lead 30 in place. According to an embodiment of the invention, not shown, it is possible to lengthen one or both of these ears 29 such (see dotted line) that it is possible to alternatively connect so called plane-plug contacts, the ears thereby being designed according to the present standard DIN 46247.

The contact device according to the invention is designed such that sufficient long creepage distances will be achieved for high power appliances. This is achieved by providing projections 31, 32 of insulating material in the lid 10 which projections increase the creepage distance between the contacts 18 and between each contact 18 and the metallic casing 11. The projections consist of a wall 31 between the contacts 18, and of a stud 32 between the casing and each one of the contacts 18. The above mentioned locking groove 27 is arranged in the stud 32 such that the downwardly extending portion 24 will abut the stud 32. The height and thickness of the wall 31 and of the studs 32 are dimensioned to obtain sufficient creepage distances.

It is possible within the scope of the invention to modify the device in several ways. For instance, it is possible to attach a screw in the plane portion 23 and thread a screw nut thereon such that it is tightened when the terminal lead 30 is to be connected. The tube rivet 20 that is impressed from the contact means 18 may of course be replaced with a loose tube rivet which is mounted in a hole of the contact means.

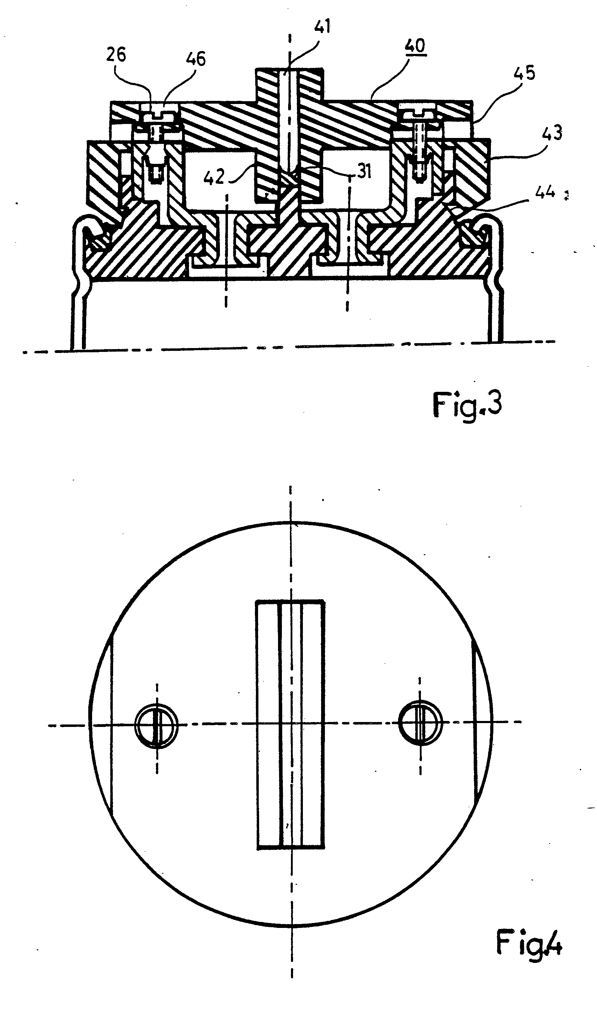

In Figures 3 and 4 an embodiment of the invention is shown with an operator's touch guard in the form of an insulating casing 40. In this case the wall 31 is shorter och fits in a groove 41 in a projection 42 located in a central portion of the casing 40. The edge 43 of the casing is provided with a snap action means 44 co acting with an edge or a groove in the lid 10. The casing is provided with suitable openings 45 for terminal leads, and openings 46 through which the terminal screws 26 can be reached with a screwdriver.

Also in this case sufficient creepage distances will be achieved. The wall 31 is suitably glued in the groove 41 such that any creep current cannot arise through the joint.

## Claims

1. A contact device for electrical components, particularly capacitors (12), which are encapsulated in a casing (11) that is provided with an insulating cover lid (10), the contact device being mounted in the lid and designed to connect terminal leads (13, 14) to the component via holes extending through the lid, the contact device having at least one contact means (18) in the form of a strip having a first end portion designed as, or alternatively, supporting a tube rivet (19), by which the contact means is secured to the lid, the tube rivet forming an electrical feed-through for the terminal leads, **characterised** in that the strip shaped contact means (18) has a second end portion with a screw connection (25, 26), the lid (10) having upwardly directed projections (31, 32) of insulating material in order to increase the creepage distance between the contact means and between the contact means and the casing (11), the second end portion of the contact means being designed as a tongue (24), which is inserted in a locking groove (27) in one (32) of the projections in order to lock the contact means against rotary screw forces.

2. A contact device according to claim 1, **characterised** by an operator's touch guard in the form of a casing (40) which co acts with the lid (10).

Fig.1

Fig.2

Fig.3

Fig.4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | DE-B2-2 126 400 (ROBERT BOSCH) <br> * Column 2 line 56 – column 4 line 25 * | 1-2 | H 01 G 1/14 |
| A | DE- 2 343 075 (GENERAL ELECTRIC) | | |
| A | US-A- 3 681 666 (BOWLING) | | |

|  |
|---|
| TECHNICAL FIELDS SEARCHED (Int. Cl.4) |
| H 01 G <br> H 01 R <br> H 01 B |

The present search report has been drawn up for all claims

| Place of search | Date of completion of the search | Examiner |
|---|---|---|
| STOCKHOLM | 23-09-88 | SANDH H. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82